# EUROPÄISCHE PATENTSCHRIFT

(11) **EP 3 705 625 B1**
(45) Veröffentlichungstag und Bekanntmachung des Hinweises auf die Patenterteilung: **14.09.2022**
(21) Anmeldenummer: 19000115.6
(22) Anmeldetag: 06.03.2019
(51) Int. Cl.: E01B 25/28, B66C 7/08, F16C 29/00, F16C 29/10

(54) **SCHIENENSYSTEM**
RAIL SYSTEM
SYSTÈME DE RAILS

(43) Veröffentlichungstag der Anmeldung: 09.09.2020
(73) Patentinhaber: Horstkemper Maschinenbau GmbH, 33397 Rietberg-Mastholte (DE)
(72) Erfinder: Wiesing, Helmut, 33129 Delbrück (DE)
(74) Vertreter: Kayser, Christoph

(56) Entgegenhaltungen:
- EP-A1- 2 890 625
- WO-A1-99/63160
- WO-A1-2017/178158
- DE-A1- 10 328 336
- DE-A1-102005 003 153
- DE-C1- 4 318 383

## Beschreibung

Die vorliegende Erfindung betrifft ein Schienensystem mit einer Schiene, mit einer Trägereinrichtung für die Schiene und mit einer Klemmeinrichtung zum festen Einklemmen der Schiene in der Trägereinrichtung, wobei die Klemmeinrichtung die Schiene nur in einer Betriebssituation in der Trägereinrichtung fest einklemmt, wobei in der Betriebssituation zwischen der Klemmeinrichtung und der Schiene eine Halteeinrichtung angeordnet ist, welche die Schiene in einer Montagesituation in einer vorbestimmten Lage in der Trägereinrichtung lösbar einklemmt.

Ein solches Schienensystem ist beispielsweise aus DE 43 18 383 C1 bekannt. Das in dieser beschriebene Schienensystem umfasst eine Schiene, die auf einem Boden eines Trägerprofils in einem Schienenbett gelagert ist und in einer Montagesituation lösbar eingeklemmt ist. Zwischen der Schiene und einer Seitenwand des Trägerprofils befindet sich eine Lücke, so dass sich die Schiene während der Montagesituation leicht aus ihrer optimalen Lage im Schienenbett lösen und in die Lücke verrutschen kann. Das geschieht insbesondere dann, wenn die Schiene auch noch eine erhebliche Länge aufweist, und/oder auch dann, wenn sich auf beiden Seiten der Schiene eine solche Lücke befindet.

In beiden Fällen (Lücke auf einer oder auf beiden Seiten der Schiene) hat die Schiene in der Montagesituation also keinen ausreichenden seitlichen Halt, um die präzise Lage der Schiene im Schienenbett auch während der Montage über die gesamte Länge eines zu verlegenden Schienenabschnitts zu gewährleisten. Die Schiene droht also während der Montage immer wieder in die eine oder ggf. auch in die andere Lücke zu rutschen und muss dann streckenweise wieder neu im Schienenbett positioniert werden. Das ist mühsam und zeitaufwändig. Die beschriebene Halteeinrichtung muss über ihre gesamte Länge frei an das Schienenbett herangeführt werden. Das ist nachteilig für eine präzise und schnelle Montage.

Aus DE 103 28 336 A1 und DE 10 2005 003 153 A1 ist jeweils ein Schienensystem mit einer im Querschnitt eckigen Schiene bekannt, an der in einer Montagesituation eine Halteinrichtung angebracht ist. Auch diese Schiene muss über ihre gesamte Länge frei an das Schienenbett herangeführt werden.

Die Aufgabe der vorliegenden Erfindung ist daher, ein Schienensystem der eingangs genannten Art derart weiterzubilden, dass eine Schiene in einer Trägereinrichtung bereits in einer Montagesituation präzise positioniert werden kann.

Die Aufgabe wird erfindungsgemäß dadurch gelöst, dass die Halteeinrichtung in der Trägereinrichtung beweglich gelagert ist und der Montagesituation bewegbar ist.

Das erfindungsgemäße Schienensystem umfasst vier Bauteile, die in der Betriebssituation zusammenwirken, und wenigstens drei Bauteile, die in der Montagesituation zusammenwirken.

Durch die bewegliche Lagerung der Halteeinrichtung in der Trägereinrichtung wird die Halteeinrichtung in der Montagesituation während ihrer Bewegung geführt. Der Benutzer muss daher nicht auf die Führung der Halteeinrichtung während der Bewegung in dem Maße achtgeben, wie ohne Halteeinrichtung.

Insbesondere ist vorgesehen, dass die Halteeinrichtung in der Trägereinrichtung schwenkbar gelagert ist und in der Montagesituation schwenkbar ist. Dadurch wird die Betätigung der Halteeinrichtung durch einen Benutzer vereinfacht. Der Benutzer kann die Halteeinrichtung an einer geeigneten Stelle von oben angreifen und eine Schwenkbewegung herbeiführen. Eine solche geeignete Stelle von oben kann für den Benutzer leichter zugänglich gemacht sein, als dies beispielsweise der Fall wäre, wenn die Halteeinrichtung translatorisch von einer Seite aus bewegt werden müsste. Wenn das Schienensystem auf einem Boden verlegt wird, ist die geeignete Stelle bei einer schwenkbaren Lagerung von oben zugänglich, bei einer translatorischen Lagerung eher von der Seite.

Insbesondere ist vorgesehen, dass die Halteeinrichtung ein Halteprofil ist, das eine Halteprofil-Anlagefläche zur Anlage an der Schiene und eine der Halteprofil-Anlagefläche entgegengesetzte Halteprofil-Strukturfläche aufweist.

Mit der unterschiedlichen Ausbildung der einander entgegengesetzten Halteprofil-Anlageflächen ist es möglich, diesen Anlageflächen unterschiedliche Funktionen zukommen zu lassen.

Insbesondere ist vorgesehen, dass die Klemmeinrichtung ein Klemmprofil ist, das eine erste Klemmprofil-Strukturfläche zur Anlage an der Halteprofil-Strukturfläche und eine zweite Klemmprofil-Strukturfläche zur Anlage an der Trägereinrichtung aufweist. Durch die Zuordnung der jeweiligen Strukturflächen zu einem anderen Bauteil ist wenigstens eine kraftschlüssige Verbindung zwischen der Trägereinrichtung, dem Klemmprofil und dem Halteprofil in der Betriebssituation sichergestellt.

Insbesondere ist vorgesehen, dass die Klemmeinrichtung als Spreizfeder ausgebildet ist, die in der Betriebssituation vorgespannt ist. Die Ausbildung der Klemmeinrichtung als Spreizfeder, die in der Betriebssituation vorgespannt ist, unterstützt die kraftschlüssige Verbindung zwischen der Trägereinrichtung, der Klemmeinrichtung und der Halteeinrichtung in der Betriebssituation, das heißt, mit in der Trägereinrichtung eingelegter Schiene.

Insbesondere ist vorgesehen, dass die Klemmeinrichtung einen Schlitz aufweist, der einen ersten Teil des Klemmprofils, der die erste Klemmprofil-Strukturfläche trägt, von einem zweiten Teil des Klemmprofils, der die zweite Klemmprofil-Strukturfläche trägt, wenigstens teilweise trennt. Die Ausbildung des Schlitzes führt dazu, dass die beiden Teile des Klemmprofils in der Betriebssituation gegeneinandergedrückt werden und somit in jeweils eine Richtung vom Schlitz weg vorgespannt sind.

Insbesondere ist vorgesehen, das die Halteprofil-Anlage-fläche und die Trägereinrichtung die Schiene in der Betriebssituation und in der Montagesituation formschlüssig aufnehmen. Dadurch wird sichergestellt, dass sich die Schiene auch bei einem versagenden Kraftschluss nicht aus der Trägereinrichtung lösen kann.

Insbesondere ist vorgesehen, dass die Halteprofil-Anlage-fläche konkav ausgebildet ist und an einen ersten konvexen Abschnitt der Schiene angepasst ist. Das konkave und konvexe Zusammenspiel zwischen Halteprofil-Anlagefläche und Schiene führt zu einer besonders günstigen Kraftwirkung in der Betriebssituation und zu einem leicht herstellbaren Formschluss in der Montagesituation.

Insbesondere ist vorgesehen, dass die erste Klemmprofil-Strukturfläche eine Struktur aufweist, die an eine Struktur der Halteprofil-Strukturfläche angepasst ist, derart, dass die erste Klemmprofil-Strukturftäche und die zweite Klemmprofil-Strukturfläche in der Betriebssituation ineinandergreifen können. So können zum Beispiel die Halteprofil-Strukturfläche und die Klemmprofil-Strukturfläche mit einer aneinander angepassten Verzahnung oder Rasterung versehen sein, die in der Betriebssituation eine kraft- und formschlüssige Verbindung zwischen dem Klemmprofil und dem Halteprofil erzeugen, so dass das Klemmprofil nicht mehr aus der Trägereinrichtung entfernt werden kann.

Ebenso ist es optional vorgesehen, dass die zweite Klemmprofil-Strukturfläche eine Struktur aufweist, die an eine Struktur einer ersten Seitenwand der Trägereinrichtung angepasst ist, derart, dass die zweite Klemmprofil-Strukturfläche und die erste Seitenwand in der Betriebssituation ineinandergreifen können. Dadurch wird die gleiche kraft- und formschlüssige Verbindung sowohl zwischen der Klemmeinrichtung und der Trägereinrichtung als zwischen der Klemmeinrichtung und der Halteeinrichtung hergestellt. Dadurch wird in der Betriebssituation der feste, unlösbare Sitz der Klemmeinrichtung zwischen der Trägereinrichtung und der Halteeinrichtung sichergestellt.

Weitere Vorteile ergeben sich aus den weiteren Merkmalen der Unteransprüche.

Insgesamt ist ein Vorteil auch darin zu sehen, dass die Klemmeinrichtung in der bevorzugten Ausführungsform ohne Fremdwerkzeug in die Trägereinrichtung gepresst werden kann und in der Trägereinrichtung ohne weitere Befestigungsmittel fest eingefügt ist.

Eine Ausführungsform der vorliegenden Erfindung wird im Folgenden anhand der Zeichnungen näher beschrieben. Es zeigen:
Fig. 1 eine schematische Darstellung eines Querschnitts durch ein erfindungsgemäßes Schichtsystem in einer Montagesituation ohne Klemmeinrichtung; und
Fig. 2 eine schematische Darstellung im Querschnitt des erfindungsgemäßen Schienensystems aus Fig. 1 in einer Betriebssituation mit Klemmeinrichtung.

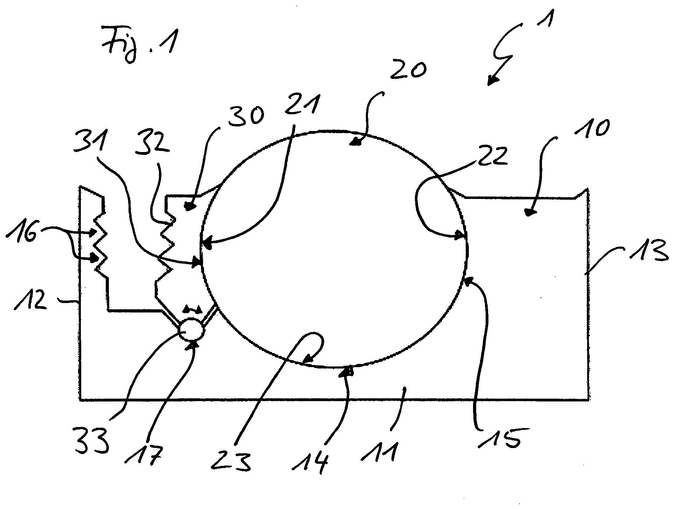

In Fig. 1 ist schematisch ein Schienensystem 1 gemäß vorliegender Erfindung im Querschnitt dargestellt. Das Schienensystem 1 umfasst im Wesentlichen eine Trägereinrichtung 10, eine Schiene 20, eine Halteeinrichtung 30 und eine Klemmeinrichtung 40.

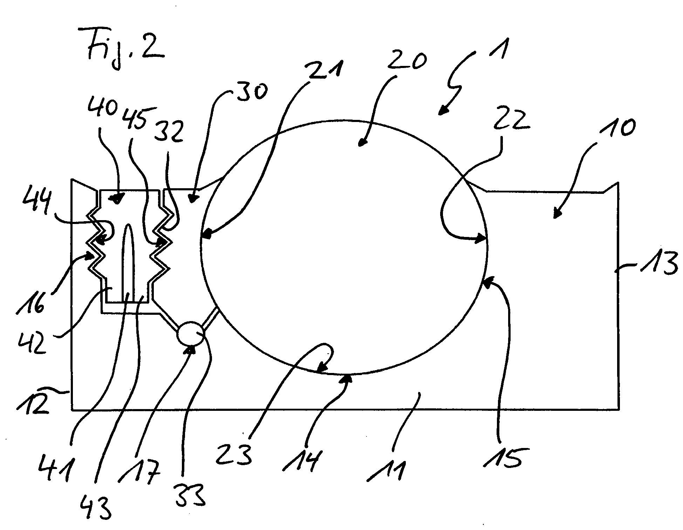

Das erfindungsgemäße Schienensystem 1 unterscheidet sich gegenüber einer Vorrichtung durch das systemische Zusammenwirken der vorgenannten Bauteile in unterschiedlichen Situationen. Im Rahmen der vorliegenden Erfindung wird zwischen einer Montagesituation (Fig. 1) und einer Betriebssituation (Fig. 2) unterschieden.

Für das systemische Zusammenwirken der vorgenannten Bauteile kommt es im Sinne der vorliegenden Erfindung nicht auf konkrete Formen, Materialien und Herstellungsverfahren an. So kann die Schiene 20 nicht nur einen runden Querschnitt aufweisen, wie in der dargestellten bevorzugten Ausführungsform, sondern in anderen Ausführungsformen auch unrunde Querschnitte haben. Ebenso kann die Trägereinrichtung 10 ein im Querschnitt nach oben offenes Profil oder wenigstens teilweise geschlossenes Profil aufweisen. Die Halteeinrichtung 30 ist in der bevorzugten Ausführungsform schwenkbar gelagert, so dass diese eine geführte Bewegung durchführen kann. In anderen Ausführungsformen kann die Halteeinrichtung 30 auch translatorisch bewegt werden, entweder in einer Führung oder ungeführt. Auch die Klemmeinrichtung 40 kann in anderen Ausführungsformen beliebig gestaltet sein, sofern mit dieser Gestaltung eine Klemmwirkung erzielt werden kann. In der bevorzugten Ausführungsform ist die Trägereinrichtung 10 in einem Strangpressverfahren aus Aluminium hergestellt. In anderen Ausführungsformen kann die Trägereinrichtung 10 auch aus anderen Materialien und mit anderen Herstellungsverfahren hergestellt sein. In der bevorzugten Ausführungsform ist die Schiene 20 aus einen gehärteten und geschliffenen Stahl Cf53 hergestellt. In anderen Ausführungsformen können andere Materialien zur Herstellung der Schiene 20 verwendet werden. Die Halteeinrichtung 30 ist in der bevorzugten Ausführungsform aus Aluminium in einem Strangpressverfahren hergestellt. Auch die Halteeinrichtung 30 kann in anderen Ausführungsformen aus anderen Materialien und durch andere Herstellungsverfahren hergestellt sein. Die Klemmeinrichtung 40 ist in der vorliegenden Ausführungsform ebenfalls aus Aluminium in einem Strangpressverfahren hergestellt. Auch für die Klemmeinrichtung 40 gilt, dass diese in anderen Ausführungsformen aus anderen Materialien und anderen Herstellungsverfahren hergestellt werden kann. Zudem können in anderen Ausführungsformen die Trägereinrichtung 10, die Halteeinrichtung 30 und die Klemmeinrichtung 40 aus unterschiedlichen Materialien mit unterschiedlichen Herstellungsverfahren hergestellt sein.

Die Abmessungen des erfindungsgemäßen Schienensystems 1 können beliebig an den Bedarf und die jeweiligen Anforderungen angepasst werden. In der bevorzugten Ausführungsform, in welcher die Schiene 20 als Welle ausgebildet ist, ist das Schienensystem 1 vorzugsweise in Anlehnung an den Wellendurchmesser kategorisiert. Üblich sind Durchmesser für eine Schiene 20 in der bevorzugten Ausführungsform von 25 mm, 30 mm, 40 mm, 50 mm oder 60 mm.

In Anbetracht der vorstehenden Ausführungen ist in Fig. 1 das erfindungsgemäße Schienensystem 1 in einer Montagesituation dargestellt, in der sich die Klemmeinrichtung 40 noch nicht in dem Schienensystem 1 befindet. In Fig. 2 ist das erfindungsgemäße Schienensystem 1 in einer Betriebssituation dargestellt, in welcher die Klemmeinrichtung 40 in das Schienensystem 1 eingefügt ist.

Die Trägereinrichtung 10 ist in der bevorzugten Ausführungsform als ein in der Montagesituation und in der Betriebssituation im Querschnitt oben offenes Trägerprofil ausgebildet. Die Trägereinrichtung 10 hat einen Boden 11, eine erste Seitenwand 12 und eine zweite Seitenwand 13. Am Boden 11 der Trägereinrichtung 10 ist ein Schienenbett 14 ausgebildet, das an die Umfangsform der Schiene 20 angepasst ist. In der bevorzugten Ausführungsform ist das Schienenbett 14 im Boden 11 der Trägereinrichtung 10 konkav ausgebildet. Die zweite Seitenwand 13 ist so ausgebildet, dass sich diese an das Schienenbett 14 seitlich anschließt und dieses übergangslos ergänzt. In der dargestellten, bevorzugten Ausführungsform erstreckt sich das Schienenbett 14 somit kontinuierlich in einen konkaven Seitenabschnitt 15 der zweiten Seitenwand 13 hinein. Der Seitenabschnitt 15 der zweiten Seitenwand 13 ist also in der vorliegenden Ausführungsform ebenfalls konkav ausgebildet.

Die erste Seitenwand 12 der Trägereinrichtung 10 liegt in einem seitlichen Abstand zum Schienenbett 14, so dass zwischen der im Schienenbett 14 angeordneten Schiene 20 und der ersten Seitenwand 12 eine Lücke vorhanden ist. Die erste Seitenwand 12 ist innenseitig, also in Richtung der Lücke, mit einer Struktur 16 versehen, die in der bevorzugten Ausführungsform Zähne oder Rasten bildet. Die Zähne oder Rasten der Struktur 10 können gleich oder ungleich und/oder regelmäßig oder unregelmäßig ausgebildet sein. Im Boden 11 der Trägereinrichtung 10 ist im Bereich der Lücke zudem eine Gelenkpfanne 17 ausgebildet. In diese ist die Halteinrichtung 30 eingefügt, sodass die Halteeinrichtung 30 in der Montagesituation um eine Schwenkachse in der Gelenkpfanne 17 bewegt /geschwenkt werden kann.

Die Schiene 20 weist einen ersten konvexen Abschnitt 21, einen zweiten konvexen Abschnitt 22 und einen dritten konvexen Abschnitt 23 auf. In der vorliegenden, bevorzugten Ausführungsform ist die Schiene 20 eine Welle mit einem runden Querschnitt, so dass der erste konvexe Abschnitt 21, der zweite konvexe Abschnitt 22 und der dritte konvexe Abschnitt 23 jeweils einen Teil des runden Wellenumfangs bilden. Der zweite konvexe Abschnitt 22 ist an den konkave Seitenabschnitt 15 der zweiten Seitenwand 13 angepasst. Der dritte konvexe Abschnitt 23 der Schiene 20 ist an das konkave Schienenbett 14 angepasst. Mit "angepasst" ist im Rahmen der vorliegenden Erfindung gemeint, dass die Radien der jeweils einander zugeordneten konvexen und konkaven (Seiten-)Abschnitte im Wesentlichen identisch sind.

Die Halteeinrichtung 30 ist in der vorliegenden Ausführungsform als Halteprofil ausgebildet und umfasst eine Halteprofil-Anlagefläche 31, die konkav ausgebildet ist und an den ersten konvexen Abschnitt 21 der Schiene 20 angepasst ist. Auch in diesem Fall ist damit gemeint, dass die Radien der jeweils einander zugeordneten konvexen bzw. konkaven Abschnitte im Wesentlichen identisch sind. Die Halteeinrichtung 30 umfasst zudem eine Halteprofil-Strukturfläche 32, die der Halteprofil-Anlagefläche 31 entgegengesetzt ist. Die Halteprofil-Strukturfläche 32 weist eine Struktur auf, die in der vorliegenden Ausführungsform aus Zähnen oder Rasten gebildet wird. Auch diese Zähne oder Rasten der Halteprofil-Strukturfläche 32 können gleich oder ungleich angeordnet und/oder regelmäßig oder unregelmäßig ausgebildet sein. In der vorliegenden Ausführungsform ist die Struktur der Halteprofil-Strukturfläche 32 spiegelverkehrt zu der gegenüberliegenden Struktur 16 der ersten Seitenwand 12 ausgebildet. Die Halteeinrichtung 30 ist in der Montagesituation bewegbar. In der in Fig. 1 dargestellten, bevorzugten Ausführungsform ist die Halteeinrichtung 30 in der Gelenkpfanne 17 der Trägereinrichtung 10 mit einem Ansatz 33 schwenkbar gelagert. Die Schwenkbarkeit ergibt sich in der vorliegenden Ausführungsform ein Schwenkbereich, der abhängig ist von dem zwischen der Halteeinrichtung 30 und dem Boden 11 der Trägereinrichtung 10 dargestellten Abstand/Spiel. Der Schwenkbereich ist also auf einen spitzen Winkel beschränkt und wird durch den an die Gelenkpfanne 17 angrenzenden Boden 11 begrenzt, an den die Halteeinrichtung 30 ggf. anstößt.

Wie bereits weiter oben ausgeführt, kann die Bewegbarkeit der Halteeinrichtung 30 in anderen Ausführungsformen technisch anders umgesetzt werden. In der vorliegenden Ausführungsform ist die Halteeinrichtung 30 in der Montagesituation so weit beweglich, dass die Schiene 20 bei der Montage in das Schienenbett 14 der Trägereinrichtung 10 ohne Behinderung durch die Halteeinrichtung 30 eingelegt werden kann und nach dem Einlegen der Schiene 20 in das Schienenbett 14 die Halteeinrichtung 30 im Uhrzeigersinn so weit an die Schiene 20 geschwenkt werden kann, bis die Halteprofil-Anlagefläche 31 an dem ersten Abschnitt 21 der Schiene 20 anliegt (siehe Doppelpfeil in Fig. 1). Dadurch wird die Schiene 20 in der Montagesituation sicher und in der dargestellten, bevorzugten Ausführungsform formschlüssig in dem Schienenbett 14 und an dem konkaven Seitenabschnitt 15 der zweiten Seitenwand 13 gehalten.

In der in Fig. 1 dargestellten Montagesituation besteht zwischen der ersten Seitenwand 12 und der Halteeinrichtung 30 weiterhin eine Lücke. Zur Herstellung der in Fig. 2 dargestellten Betriebssituation wird in diese Lücke die Klemmeinrichtung 40 eingefügt. In der vorliegenden Ausführungsform ist die Klemmeinrichtung 40 ein Klemmprofil, das von oben in die Lücke zwischen der ersten Seitenwand 12 und der Halteeinrichtung 30 eingepresst wird. Da für das Einpressen keine Rotationsbewegung wie im Stand der Technik erforderlich ist, kann die die Klemmeinrichtung 30 einfach mit dem Fuß oder auch mit der Hand senkrecht von oben eingepresst werden.

Die Klemmeinrichtung 40 weist einen Schlitz 41 auf, der die Klemmeinrichtung 40 in einen ersten Teil 42 und einen zweiten Teil 43 teilt. Der erste Teil weist eine erste Klemmprofil-Strukturfläche 44 auf und der zweite Teil 43 weist eine zweite Klemmprofil-Strukturfläche 45 auf. Die Struktur der beiden Strukturflächen wird in der vorliegenden Ausführungsform durch Zähne oder Rasten gebildet. Diese können gleich oder ungleich sein ausgebildet und/oder regelmäßig oder unregelmäßig angeordnet sein. In der vorliegenden Ausführungsform sind die Struktur der ersten Klemmprofil-Strukturfläche 44 und die zweite Klemmprofil-Strukturfläche 45 spiegelverkehrt ausgebildet. Zudem sind die Strukturen der Klemmeinrichtung 40 jeweils an die Struktur 16 der ersten Seitenwand 12 sowie an die Struktur der Halteprofil-Strukturfläche 32 angepasst, so dass die Struktur der Klemmeinrichtung 40 nach dem Einpressen in die Lücke in die jeweilige Struktur der ersten Seitenwand 12 und der Halteeinrichtung 30 selbst-hemmend eingreifen kann. Der Querschnitt der Lücke zwischen der Halteinrichtung 30 und der ersten Seitenwand 12 ist etwas geringer als eine Breite der Klemmeinrichtung, sodass der erste Teil 42 und der zweite Teil 43 beim Einpressen in die Lücke ein wenig zusammengedrückt werden. Durch den Schlitz 41 in der Klemmeinrichtung 40 wird eine Vorspannung in der Betriebssituation erzielt, mit einer Federwirkung, die derjenigen einer Spreizfeder entspricht. Auf diese Weise wird die Klemmwirkung erhöht, so dass die Halteeinrichtung 30 und die Schiene 20 lagefixiert sind.

In der bevorzugten Ausführungsform ist die Klemmeinrichtung 40 ohne Fremdwerkzeug in das Schienensystem 1 einpressbar. Die Entnahme der Klemmeinrichtung 40 aus dem Schienensystem 1 ist in der bevorzugten Ausführungsform nicht möglich, ohne die Klemmeinrichtung 40 zu zerstören. In anderen Ausführungsformen kann die Klemmeinrichtung 40 aber durch andere technische Lösungen mit Fremdwerkzeugen eingebracht und herausgelöst werden.

Das Schienensystem 1 der vorliegenden Erfindung kann auf einem Untergrund einzeln, paarweise mit zwei parallel verlaufenden Schienen 20 oder auch in einer Gruppe aus mehreren (z.B. drei) parallel verlaufenden Schienen 20 verlegt sein. Auf dem Schienensystem der vorliegenden Erfindung können Fahrzeuge rollend bewegt werden, indem sich diese mit Rädern auf der jeweiligen Schiene abstützen.

### Bezugszeichenliste

- 1: Schienensystem
- 10: Trägereinrichtung
- 11: Boden
- 12: erste Seitenwand
- 13: zweite Seitenwand
- 14: Schienenbett
- 15: konkaver Seitenabschnitt
- 17: Gelenkpfanne
- 20: Schiene
- 21: erster konvexer Abschnitt
- 22: zweiter konvexer Abschnitt
- 23: dritter konvexer Abschnitt
- 30: Halteeinrichtung
- 31: Halteprofil-Anlagefläche
- 32: Halteprofil-Strukturfläche
- 33: Ansatz
- 40: Klemmeinrichtung
- 41: Schlitz
- 42: erster Teil
- 43: zweiter Teil
- 44: erste Klemmprofil-Strukturfläche
- 45: zweite Klemmprofil-Strukturfläche

## Patentansprüche

1. Schienensystem (1) mit einer Schiene (20), mit einer Trägereinrichtung (10) für die Schiene (20) und mit einer Klemmeinrichtung (40) zum festen Einklemmen der Schiene (20) in der Trägereinrichtung (10), wobei die Klemmeinrichtung (40) die Schiene (20) nur in einer Betriebssituation in der Trägereinrichtung (10) fest einklemmt,
wobei in der Betriebssituation zwischen der Klemmeinrichtung (40) und der Schiene (20) eine Halteeinrichtung (30) angeordnet ist, welche die Schiene (20) in einer Montagesituation in einer vorbestimmten Lage in der Trägereinrichtung (10) lösbar einklemmt
**dadurch gekennzeichnet,**
**dass** die Halteeinrichtung (30) in der Trägereinrichtung (10) beweglich gelagert ist und in der Montagesituation bewegbar ist.

2. Schienensystem nach Anspruch 1,
**dadurch gekennzeichnet,**
**dass** die Halteeinrichtung (30) in der Trägereinrichtung (10) schwenkbar gelagert ist und in der Montagesituation schwenkbar ist.

3. Schienensystem nach einem der Ansprüche 1 oder 2,
**dadurch gekennzeichnet,**
**dass** die Halteeinrichtung (30) ein Halteprofil ist, das eine Halteprofil-Anlagefläche (31) zur Anlage an der Schiene (20) und eine der Halteprofil-Anlagefläche (31) entgegengesetzte Halteprofil-Strukturfläche (32) aufweist.

4. Schienensystem nach einem der vorstehenden Ansprüche,
**dadurch gekennzeichnet,**
**dass** die Klemmeinrichtung (40) ein Klemmprofil ist, das eine erste Klemmprofil-Strukturfläche (44) zur Anlage an der Halteprofil-Strukturfläche (32) und eine zweite Klemmprofil-Strukturfläche (45) zur Anlage an der Trägereinrichtung (10) aufweist.

5. Schienensystem nach einem der vorstehenden Ansprüche,
**dadurch gekennzeichnet,**
**dass** die Klemmeinrichtung (40) als Spreizfeder ausgebildet ist, die in der Betriebssituation vorgespannt ist.

6. Schienensystem nach Anspruch 4,
**dadurch gekennzeichnet,**
**dass** die Klemmeinrichtung (40) einen Schlitz (41) aufweist, der einen ersten Teil (41) des Klemmprofils, der die erste Klemmprofil-Strukturfläche (44) trägt, von einem zweiten Teil (42) des Klemmprofils, der die zweite Klemmprofil-Strukturfläche (45) trägt, wenigstens teilweise trennt.

7. Schienensystem nach dem Anspruch 3,
**dadurch gekennzeichnet,**
**dass** die Halteprofil-Anlagefläche (31) und die Trägereinrichtung (10) die Schiene (20) in der Betriebssituation und in der Montagesituation formschlüssig aufnehmen.

8. Schienensystem nach Anspruch 7,
**dadurch gekennzeichnet,**
**dass** die Halteprofil-Anlagefläche (31) konkav ausgebildet ist und an einen ersten konvexen Abschnitt (21) der Schiene (20) angepasst ist.

9. Schienensystem nach einem der Ansprüche 4 oder 6,
**dadurch gekennzeichnet,**
**dass** die erste Klemmprofil-Strukturfläche (44) eine Struktur aufweist, die an eine Struktur der Halteprofil-Strukturfläche (32) angepasst ist, derart, dass die erste Klemmprofil-Strukturfläche (44) und die Halteprofil-Strukturfläche (32) in der Betriebssituation ineinandergreifen können.

10. Schienensystem nach einem der Ansprüche 4, 6 oder 9,
**dadurch gekennzeichnet,**
**dass** die zweite Klemmprofil-Strukturfläche (45) eine Struktur aufweist, die an eine Struktur einer ersten Seitenwand (12) der Trägereinrichtung (10) angepasst ist, derart, dass die zweite Klemmprofil-Strukturfläche (45) und die erste Seitenwand (12) in der Betriebssituation selbsthemmend ineinandergreifen können.

11. Schienensystem nach einem der vorstehenden Ansprüche,
**dadurch gekennzeichnet,**
**dass** die Trägereinrichtung (10) ein in der Montagesituation und in der Betriebssituation im Querschnitt nach oben offenes Trägerprofil ist.

12. Schienensystem nach einem der vorstehenden Ansprüche,
**dadurch gekennzeichnet,**
**dass** die Trägereinrichtung (10) ein Schienenbett (14) aufweist, das an einem Boden (11) der Trägereinrichtung (10) ausgebildet ist.

13. Schienensystem nach Anspruch 12,
**dadurch gekennzeichnet,**
**dass** die Trägereinrichtung (10) das Schienenbett (14) an einer der Halteprofil-Anlagefläche (32) entgegengesetzten zweiten Seitenwand (13) ergänzt.

14. Schienensystem nach Anspruch 13,
**dadurch gekennzeichnet,**
**dass** die zweite Seitenwand (13) einen konkav Seitenabschnitt (15) aufweist, der an einen zweiten konvexen Abschnitt (22) der Schiene (20) angepasst ist.

15. Schienensystem nach einem der vorstehenden Ansprüche,
**dadurch gekennzeichnet,**
**dass** die Schiene (20) eine Welle ist.

## Claims

1. A rail system (1), comprising a rail (20), a support device (10) for the rail (20) and a clamping device (40) for fixedly clamping the rail (20) in the support device (10), wherein the clamping device (40) fixedly clamps the rail (20) in the support device (10) only in an operating situation,
wherein in the operating situation, a holding device (30) is arranged between the clamping device (40) and the rail (20), which holding device clamps the rail (20) in an installation situation in a predefined position in the support device (10) in a releasable manner,
**characterized in that**
the holding device (30) is movably supported in the support device (10) and is movable in the installation situation.

2. The rail system according to claim 1,
**characterized in that**
the holding device (30) is pivotably supported in the holding device (10) and is pivotable in the installation situation.

3. The rail system according to any one of claims 1 or 2,
**characterized in that**
the holding device (30) is a holding profile which has a holding profile contact surface (31) for engaging on the rail (20) and a holding profile structure surface (32) opposite the holding profile contact surface (31).

4. The rail system according to any one of the preceding claims,
**characterized in that**
the clamping device (40) is a clamping profile which has a first clamping profile structure surface (44) for engaging on the holding profile structure surface (32) and a second clamping profile structure surface (45) for engaging on the support device (10).

5. The rail system according to any one of the preceding claims,
**characterized in that**
the clamping device (40) is implemented in form of an expansion spring which is pretensioned in the operating situation.

6. The rail system according to claim 4,
**characterized in that**
the clamping device (40) has a slot (41), which at least partially separates a first part (41) of the clamping profile carrying the first clamping profile structure surface (44) from a second part (42) of the clamping profile carrying the second clamping profile structure surface (45).

7. The rail system according to claim 3,
**characterized in that**
the holding profile contact surface (31) and the support device (10) positively accommodate the rail (20) in the operating situation and in the installation situation.

8. The rail system according to claim 7,
**characterized in that**
the holding profile contact surface (31) is implemented in a concave manner and adapted to a first convex section (21) of the rail (20).

9. The rail system according to any one of claims 4 or 6,
**characterized in that**
the first clamping profile structure surface (44) has a structure which is adapted to a structure of the holding profile structure surface (32) in such a manner that the first clamping profile structure surface (44) and the holding profile structure surface (32) can engage into one another in the operating situation.

10. The rail system according to any one of claims 4, 6 or 9,
**characterized in that**
the second clamping profile structure surface (45) has a structure which is adapted to a structure of a first sidewall (12) of the support device (10) in such a manner that the second clamping profile structure surface (45) and the first sidewall (12) can engage into one another in a self-locking manner in the operating situation.

11. The rail system according to any one of the preceding claims,
**characterized in that**
the support device (10) is a support profile with a cross-section that is open towards the top in the installation situation and in the operating situation.

12. The rail system according to any one of the preceding claims,
**characterized in that**
the support device (10) has a rail bed (14) which is formed on a base (11) of the support device (10).

13. The rail system according to claim 12,
**characterized in that**
the support device (10) complements the rail bed (14) on a second sidewall (13) opposite the holding profile contact surface (31).

14. The rail system according to claim 13,
**characterized in that**
the second sidewall (13) has a concave lateral section (15) which is adapted to a second convex section (22) of the rail (20).

15. The rail system according to any one of the preceding claims,
**characterized in that**
the rail (20) is a shaft.

## Revendications

1. Système de rails (1) comprenant un rail (20), avec un dispositif porteur (10) pour le rail (20) et un dispositif de serrage (40) pour le serrage fixe du rail (20) dans le dispositif porteur (10), dans lequel le dispositif de serrage (40) serre fixement le rail (20) dans le dispositif porteur (10) uniquement dans une situation de fonctionnement,
dans lequel dans la situation de fonctionnement, un dispositif de retenue (30) est disposé entre le dispositif de serrage (40) et le rail (20), lequel serre le rail (20) de manière séparable dans le dispositif porteur (10) dans une position pré-définie dans une situation de montage,
**caractérisé en ce que**
le dispositif de retenue (30) est positionné mobile dans le dispositif porteur (10) et peut se déplacer dans la situation de montage.

2. Système de rails selon la revendication 1,
**caractérisé en ce que**
le dispositif de retenue (30) est positionné pivotant dans le dispositif porteur (10) et pivotant dans la situation de montage.

3. Système de rails selon la revendication 1 ou 2,
**caractérisé en ce que**
le dispositif de retenue (30) est un profilé de retenue qui présente une face d'appui de profilé de retenue (31) pour se reposer contre le rail (20) et une face structurée de profilé de retenue (32) opposée à la face d'appui de profilé de retenue (31).

4. Système de rails selon l'une des revendications précédentes,
**caractérisé en ce que**
le dispositif de serrage (40) est un profilé de serrage qui présente une première face structurée de profilé de serrage (44) pour se reposer contre la face structurée de profilé de retenue (32) et une seconde face structurée de profilé de serrage (45) pour se reposer contre le dispositif porteur (10).

5. Système de rails selon l'une des revendications précédentes,
**caractérisé en ce que**
le dispositif de serrage (40) est conçu en tant que ressort écarteur qui est pré-contraint dans la situation de fonctionnement.

6. Système de rails selon la revendication 4,
**caractérisé en ce que**
le dispositif de serrage (40) présente une fente (41) qui sépare au moins partiellement une première partie (41) du profilé de serrage qui porte la première face structurée de profilé de serrage (44), d'une seconde partie (42) du profilé de serrage qui porte la seconde face structurée de profilé de serrage (45).

7. Système de rails selon la revendication 3,
**caractérisé en ce que**
la face d'appui de profilé de retenue (31) et le dispositif porteur (10) reçoivent le rail (20) par adhérence de formes dans la situation d'exploitation et la situation de montage.

8. Système de rails selon la revendication 7,
**caractérisé en ce que**
la face d'appui de profilé de retenue (31) est conçue concave et est adaptée à un premier tronçon (21) convexe du rail (20).

9. Système de rails selon l'une des revendications 4 ou 6, **caractérisé en ce que**
la première face structurée de profilé de serrage (44) présente une structure qui est adaptée à une structure de la face structurée de profilé de retenue (32) de telle façon que la première face structurée de profilé de serrage (44) et la face structurée de profilé de retenue (32) peuvent s'engrener l'une dans l'autre dans la situation de fonctionnement.

10. Système de rails selon l'une des revendications 4, 6 ou 9,
**caractérisé en ce que**
la seconde face structurée de profilé de serrage (45) présente une structure qui est adaptée à une structure d'une première paroi latérale (12) du dispositif porteur (10) de telle façon que la seconde face structurée de profilé de serrage (45) et la première paroi latérale (12) peuvent s'engrener l'une dans l'autre de façon auto-bloquante dans la situation de fonctionnement.

11. Système de rails selon l'une des revendications précédentes,
**caractérisé en ce que**
le dispositif porteur (10) est un profilé porteur ouvert vers le haut en section dans la situation de montage et dans la situation de fonctionnement.

12. Système de rails selon l'une des revendications précédentes,
**caractérisé en ce que**
le dispositif porteur (10) présente un ballast (14) qui est conçu sur un fond (11) du dispositif porteur (10).

13. Système de rails selon la revendication 12,
**caractérisé en ce que**
le dispositif porteur (10) complète le ballast (14) à une seconde paroi latérale (13) opposée à la face d'appui de profilé de retenue (31).

14. Système de rails selon la revendication 13,
**caractérisé en ce que**
la seconde paroi latérale (13) présente un tronçon latéral concave (15) qui est adapté à un second tronçon convexe (22) du rail (20).

15. Système de rails selon l'une des revendications précédentes,
**caractérisé en ce que**
le rail (20) est un arbre.
